# EUROPEAN PATENT SPECIFICATION

(11) **EP 1 753 308 B1**
(45) Date of publication and mention of the grant of the patent: **15.09.2010**
(21) Application number: 05746272.3
(22) Date of filing: 01.06.2005
(51) Int. Cl.: A23L 1/232, A23L 1/221

(54) **PREPARATION OF SMOKE EXTRACT**
HERSTELLUNG VON RAUCHEXTRAKT
PREPARATION D'EXTRAIT DE FUMEE

(30) Priority: 04.06.2004 DK 200400875; 04.06.2004 DK 200400877
(43) Date of publication of application: 21.02.2007
(73) Proprietor: Plaschke, Kim, 4700 Nestved (DK)
(72) Inventor: Plaschke, Kim, 4700 Nestved (DK)
(74) Representative: Schmidt, Jens Joergen
(86) International application number: PCT/DK2005/000361
(87) International publication number: WO 2005/117612

(56) References cited:
- WO-A-02/00040
- US-A- 5 681 603
- LAZARO M J ET AL: "Fractionation of a wood tar pitch by planar chromatography for the characterisation of large molecular mass materials" 23 April 1999 (1999-04-23), JOURNAL OF CHROMATOGRAPHY A, ELSEVIER, AMSTERDAM, NL, PAGE(S) 107-115 , XP004165236 ISSN: 0021-9673 the whole document

## Description

The present invention relates to the preparation of smoke extract for flavouring and colouring of food products

### BACKGROUND

Smoking of food products for preservation as well as flavouring of the food products is a very old and well known practice, in which the food products are subjected to the smoke from an combustion of wood, in which the gasses given off from the wood are not completely combusted due to lack of sufficient oxygen or due to the temperature of the combustion process. Thus, the smoke contains a vast number of substances, which provide the food products with the required features.

It is preferred for a number of food products to obtain the flavouring of smoking without subjecting the product to the traditional smoking process, and for that purpose, various types of smoke extracts have been developed.

In US 3,106,473, a method of preparing a liquid smoke extract is disclosed, in which water is passed counter current with wood smoke to extract the water soluble parts of the smoke for use as a aqueous wood smoke flavoured solution. In the same document, the use of water-soluble fractions of the product of distillation of wood or from condensed smoke from a partly combustion of wood as a liquid smoke extract is discussed as well.

When heated with no or an insufficient amount of oxygen present for a complete combustion, e.g. distillation or pyrolysis, wood produces gasses which comprises water, water soluble components and water insoluble components, the latter is known as wood tar. The remains from the process are ashes and char, which mainly comprise carbon and some heavy tar components. However, the product known as wood tar obtained by condensation of the smoke may comprise some water-soluble components in addition to the insoluble components.

The water soluble components constitutes only a minor part of the products from the pyrolysis process of the wood, and attempts have been made to extract a suitable liquid smoke product for preparation of food products from other products of the pyrolysis process.

In WO 02/00040, a pyrolysis process is performed on wood and the wood char produced is subjected to an extraction process by means of an extraction solvent in its supercritical state. The supercritical solvent has excellent properties for entraining into the char and extract components thereof, which are regained by lowering the pressure of the supercritical solvent.

The wood tar constitutes the largest part of the products from the pyrolysis process of wood, but is generally regarded as being unsuitable for food products as it contains large amounts of carcinogenic compounds, in particular polynuclear aromatic hydrocarbons (PAH) such as benzo (a) pyrene and benzo (a) athracene.

Attempts to obtain a suitable liquid smoke from the tar have been made, and one is disclosed in US 5,681,603, in which the wood tar is dissolved in an aqueous alkali solution, which is contacted with a non-ionic, aromatic hydrocarbon based resin to remove the polynuclear aromatic compounds. However, the process requires the disposal or regeneration of the resin and is therefore a complex process, which furthermore requires a detail control and supervision of the quality of the produced liquid smoke as the contents of the wood and the produced wood tar are known to have large natural variations.

Another method is disclosed in US 4,154,866, in which the wood tar is mixed with propylene glycol, heated to about 140°C and distilled by lowering the pressure to about 100 mmHg, whereby the propylene glycol and a part of the wood tar is vaporised. After a condensation of the vapour, a treatment of the condensate by means of powdered activated carbon is required to produce a mixture of propylene glycol and wood tar fractions that comprises "no detectable amounts of 3,4-benzopyrene".

The object of the present invention is to provide a method for the production of a smoke extract for flavouring and colouring of food products, which does not have the above-mentioned drawbacks, and which method may be applied to produce smoke extract in industrial quantities with a safe, low level of PAH.

Wood tar is in general considered to be unsuitable for food products due to its high content of PAH and components, which may cause a bitter or burned taste, but it has by the present inventor been found, that a supercritical extraction process similar to the one disclosed in WO 02/00040 actually may be used on the wood tar instead of on the char and produce a high quality smoke extract, which is low in PAH and which may be produced in large quantities without introducing chemicals into the process, which could give rise to new safety concerns for the consumer of the food products treated with the smoke extract.

The object is obtained by the method according to the present invention, in which the smoke extract is produced by means of supercritical extraction of fractions of the wood tar. The extractions solvent, such as carbon dioxide, has very good properties of entraining and resolving the required fractions of the wood tar, and it is relatively simple to separate the resolved components in the retrieving process, as the different components have different solubility at different supercritical and subcritical conditions. Thus, a smoke extract containing less than 10 ppb (parts per billion) of benzo (a) pyrene and less than 20 ppb of benzo (a) athracene may be obtained.

In a particularly preferred embodiment, the wood tar has been subject to a separation process prior to the supercritical extraction to remove a substantial part of the unwanted components, whereby the viscosity of the wood tar for the supercritical extraction process may be lowered considerably and the wood tar will be much less sticky, which provides for an easier conductance of the supercritical extraction process. Also, the supercritical extraction process may be performed with less surveillance of the quality of the retrieved fractions with respect to the contents of PAH and possibly other unwanted components, such as heavy metals

These and other advantages of the method according to the present invention and preferred embodiments thereof will be apparent from the following description of the present invention.

### BRIEF DESCRIPTION OF THE INVENTION

Thus, the present invention relates to a method of preparing a smoke extract for flavouring of food products comprising an extraction process involving
extracting one or more fractions of a wood tar with an extraction solvent substantially in its supercritical state, and
retrieving at least some of the extracted fraction or fractions of the wood tar to thereby obtain a smoke extract.

By the term wood tar is understood a tar obtained from wood and mainly comprising components, which are substantially insoluble in water, although a minor part of water-soluble components may be present as well.

The extraction solvent is preferably selected from the group consisting of carbon dioxide, methane, ethane, propane, ethylene, propylene, ammonia, methanol, water and mixtures of one or more of these solvents. However, other extraction solvents may be applied within the scope of the present invention, preferably those having a critical temperature and pressure in the range of 1 to 400°C and 20 to 500 bars respectively may be applied as extraction solvent.

The wood from which the tar has been obtained may preferably be selected from the group consisting of oak, spruce, pine, beech, cherry, mahogany, ash, maple, alder, elm, birch, hickory and poplar. In principle all kinds of wood may be suitable according to the invention and the choice between different woods is merely a matter of manipulating the taste of the prepared smoke extract. Specific examples of wood, from which the wood tar may preferably be obtained, are maple tree (*Acer negundo L*.), White birch (*Betula pendula Roth -* with *ssp. B. alba L.* and *B. verrucosa Ehrh*), European birch (*Betula pubescens Ehrh*), hornbeam (*Carpinus betulus L*.), hickory (*Carya ovata* (Mill.) *Koch* (*C. alba* (L.). *Nutt.*)), chestnut tree (*Castanea sativa* Mill.), eucalyptus (*Eucalyptus* sp.), beech (*Fagus grandifolia Ehrh.* and *Fagus sylvatica* L.), common ash (*Fraxinus excelsior* L), walnut tree (*Junglans regia* L.), apple (*Malus pumila* Mill.), mesquite wood (*Prosopis juliflora* DC.), cherry tree (*Prunus avium* L.), white oak (*Quercus alba* L.), evergreen oak (*Querqus ilex* L.), common red oak (*Quercus robur* L.), alder buckthorn (*Rhamnus frangula* L.), black locust (*Robinia pseudoacacia*), sweet elm (*Ulmus fulva* Michx) and elm (*Ulmus rubra* Mühlenb.).

The extraction process cycle comprises in a preferred embodiment of the present invention the steps of
a) supplying a portion of wood tar into a reaction container,
b) supplying a portion of extraction solvent into the reaction container,
c) allowing the extraction solvent in its supercritical state to act on the wood tar for a given contact time so as to extract one or more fractions of the wood tar,
d) leading the extraction solvent and the extracted wood tar components from the reaction container into a second chamber, while the un-extracted parts of the wood tar remain in the reaction container, and
e) reducing the pressure in the second chamber to condense at least one of the extracted tar fractions from the extraction solvent, thereby retrieving the components forming said smoke extract.

The temperature and/or pressure within the reaction container may be controlled during the process to keep the extraction solvent in a substantially supercritical state for a given contact time so as to extract one or more fractions of the wood tar.

The above extraction process may be carried out as a batch process, wherein the extraction solvent is kept in a substantially supercritical state within the reaction container for a given contact time so as to extract one or more fractions of the wood tar. The reaction container should be suitable for sustaining the high pressure of the supercritical extraction solvent, such as 250 bars.

The extraction solvent is in a batch process provided into the reaction container until a pressure within the container is build up to the supercritical pressure, the solvent in its supercritical state is allowed to react with the wood tar for a preset contact time and is then removed from the reaction container, where the pressure typically drops below the supercritical level for that solvent. The steps b) to e) of the extraction cycle may be repeated one or more times to extract more fractions of the wood tar until substantially all useful fractions for the intended purpose are extracted, and the extraction solvent may be recycled when the extracted tar fractions have been removed there from.

The reaction container may be equipped with cooling and/or heating means in order to control the temperature of the content of the reactor container during the contact time.

The portion of wood tar fed into the reaction container should preferably occupy preferably 40% or less, more preferably 30% or less and most preferably 20% or less of the interior volume of the reaction container, so as to ensure sufficient contact area between the wood tar and the solvent for an efficient extraction to take place.

Alternatively, the extraction may be carried out as a continuous process. In particularly, such continuous extraction process cycle may comprise the steps of
a) supplying a portion of wood tar into a reaction container,
b) providing a continuous flow of extraction solvent in a substantially supercritical state through the reaction container to facilitate contact between the extraction solvent and the wood tar, so as to extract one or more fractions of the wood tar,
c) continuously leading a flow of extraction solvent comprising the extracted wood tar fractions from the reaction container and into a second chamber, while the un-extracted parts of wood tar remain in the reaction container,
d) reducing the pressure in the second chamber to condense at least one of the extracted tar fractions from the extraction solvent, thereby retrieving the components forming said smoke extract, and
e) maintaining the flow of extraction solvent through the reaction container for a sufficient time to extract a measurable fraction of the wood tar.

The wood tar may be supplied into the reaction container batch wise, so that an amount of wood tar is situated in the reaction container and the continuous flow of extraction solvent in the supercritical state is maintained until all of or substantially all of the fractions of the tar which are useful for the present purpose are extracted, where after the remaining wood tar is replaced with a new amount, or the wood tar within the reaction container may be supplied continuous to the container and a remaining part of the tar may be removed continuously as well.

The extracted wood tar fractions are in a preferred embodiment of the present invention retrieved by stepwise reduction of the pressure in said second chamber, which in this case may consist of a plurality of chambers forming a cascade, where the extraction solvent is supplied from the reaction container into one chamber and there from to the subsequent chamber etc., where the pressure is lowered for each subsequent chamber. A part of the extracted wood tar is condensed at each step of the pressure reduction, e.g. two, three or four steps.

Some of the extracted wood tar is condensed in each step of pressure reduction, and the condensed wood tar in each step of pressure reduction may be collected separately to obtain one or more fractions of extracted wood tar. Using different combinations of the obtained fractions may thereafter provide aromatics having different smoke taste, flavour and colour. In particular tends the unwanted carcinogenic compounds, in particular the PAH to condense at particular pressure steps and the contents thereof in the obtained smoke extract may in this manner be reduced.

The steps of retrieving the components forming the smoke extract from the extraction solvent are well known to the skilled person and suitable examples are e.g. given in WO 02/00040.

The wood tar may prior to the contact with the extraction solvent be brought to a temperature close to the temperature of the applied extraction solvent, preferably within 30°C of said temperature, most preferred within 20°C of said temperature, so that the temperature of the extraction solvent will not drop to below the supercritical phase at contact with the wood tar.

The wood tar may advantageously be diluted or suspended in a solvent or suspending agent prior to the extraction process. Among the different purposes for mixing the wood tar with a solvent or suspending agent are the following: Protection of the equipment, extraction of a larger part of the high molecular weight components in the wood tar and adjusting the transport time when a counter current extraction process is applied. Optionally, inorganic acidic or basic components may be added as well. In one aspect the purpose of diluting or suspending the wood tar is to protect the equipment from adherence of wood tar. Otherwise low water content in the wood tar may cause the tar to adhere and stick to the equipment. In order to avoid this the wood tar is preferably diluted or suspended to an average wood tar concentration in the range of 10 to 95 % by weight, preferably 20 to 80 % by weight, more preferably 40 to 80 % by weight and most preferably 50 to 75% by weight. In a second aspect the purpose of diluting or suspending the wood tar is to adjust the transport time for the wood tar, when the extraction is carried out in a counter current process. The transport time is reduced by addition of higher amounts of solvent or suspending agent.

In general, the solvent or suspending agent should be non-toxic to humans since some of the solvent or suspending agent may be extracted by the extraction solvent, and thus will be present in the final product. Suitable solvent or suspending agents for the two abovementioned purposes may preferably be selected from the group consisting of vegetable oils, animal oils, ethanol, water or mixtures thereof.

In a third aspect the solvent or suspending agent is an enhancer for the extraction of fractions from the wood tar. In the present context an enhancer is defined as a component, which improves the ability of supercritical solvents to extract high molecular components from the wood tar. The enhancers according to the present invention are preferably selected from the group consisting of methanol, ethanol, water or mixtures thereof. Enhancers are either added prior to the extraction process or injected separately into the reactor wherein the extraction takes place. The amount of enhancer is preferably at least 0.1% v/v of the wood tar and more preferably at least 1% v/v. In general, there is no upper limit as the effect will not increase further when the enhancer is added in an amount exceeding more than about 5% v/v of the wood tar.

Additionally or alternatively, the wood tar may be admixed with a carrier prior to the extraction process, before or after being supplied into the reaction container. The use of a carrier may reduce the necessary contacting time in the extraction. The carrier is preferably substantially non-soluble in the extraction solvent in its supercritical state. The carrier is preferably selected from the group consisting of diatomite, celite, bentonite, perlite or mixtures thereof. However, in principle, any type of carrier may be used. The volumetric ratio between wood tar and carrier is advantageously within the range of 1: 0.1 and 1: 10, preferably 1: 0.5 to 1: 2.

The extraction solvent comprises in a preferred embodiment carbon dioxide in an amount of at least 85% by weight, preferably at least 90% by weight and more preferably at least 95% by weight. The remaining part of the extraction solvent may be water, or the carbon dioxide may substantially constitute about 100% by weight of the extraction solvent.

The temperature of the extraction solvent is preferably maintained within the range of 20 to 100°C, preferably 30 to 70°C and more preferably 40 to 60°C during the extraction process, and is in a particularly preferred embodiment substantially maintained at about 50°C during the extraction process. The pressure in the reaction container is maintained in the range of 75 to 500 bars, preferably 100 to 250 bars, and more preferably in the range of 120 to 180 bars, such as about 150 bars.

It has been found that the composition of the extracted smoke extract largely depends on the pressure during the extraction process, thus the taste and quality of the extracted product may be adjusted by modifying the pressure conditions of the extraction process.

The smoke extract at the end of the extraction process comprises in a preferred embodiment a fraction of the extracted wood tar that amounts to 1 to 60 % by weight, preferably 5 to 40 % by weight and more preferably 5 to 20 % by weight of the wood tar, which has been fed into the reaction container. The reason to terminate the extraction process at this level is to avoid too high concentrations of carcinogenic and/or bitter tasting components in the smoke extract.

According to the present invention it should preferably be avoided to extract more than 60 % by weight from the wood tar, which is fed into the process. The level of extraction, which is desirable, is determined by the concentration of unwanted carcinogenic and/or bitter tasting components in the smoke extract that forms during the process. Generally extending the level of extraction too far may cause the concentration of the unwanted components in the extraction product to exceed above the acceptable level.

The contact time between wood tar and extraction solvent is preferably within the range of 5 to 120 minutes, preferably 15 to 90 minutes and most preferably 20 to 60 minutes. The contacting time is an important factor in order to achieve a good quality of the extraction product. By keeping an optimal contacting time the amount of bitter and/or carcinogenic components is diminished, thus the taste and healthiness of the extracted fraction of wood tar is improved.

In a preferred embodiment, the wood tar is prepared by means of a separation process performed on a raw wood tar product before the conduction of the extraction of one or more fraction thereof for use as a smoke extract for food products.

The separation process performed on a raw wood tar product to obtain the wood tar on which the supercritical extraction process is performed may be conducted with a number of procedures known per se in the art, with the main purpose of producing a wood tar with a lower viscosity, possibly also a lower content of unwanted components, in particular of PAH and possibly of heavy metals. This separation process of one or more fractions of the raw wood tar may be performed by means of a liquid solvent, by means of which fractions of the raw tar are extracted and are retrieved again to thereby obtain the wood tar for the further extraction process. The solvent may be an oil or a substantially non-polar solvent or mixtures of these. The solvent may e.g. comprise alcohols, aldehydes or ketones, having at least two carbon atoms, alkanes, alkenes or alkynes, having at least five carbon atoms, ethers, esters, etc., but it is preferred that it is selected from the group consisting of ether, ethanol, propanol, butanol, diethyl ether, hexane, methyl acetate and any mixtures thereof.

Alternatively or additionally, the separation process performed on a raw wood tar product for the preparation of the wood tar may include separation of one or more fractions of the raw wood tar by means of a mechanical separation, such as centrifugation, so as to obtain the wood tar for the further extraction process.

The separation process performed on a raw wood tar product for the preparation of the wood tar may furthermore consist of or include distillation of the raw wood tar so as to obtain the wood tar from the distillate for the further extraction process. The distillation may in particular be performed in an arrangement comprising a plurality of condensation stations having different condensation temperatures and/or pressures, wherein a fraction of the distillate is collected at each condensation station, and the wood tar for the further extraction process comprises one or more of said fractions.

As a further alternative, which also may be applied together with any of the previous mentioned processes, the separation process performed on a raw wood tar product for the preparation of the wood tar may include separation of one or more fractions of the raw wood tar by means of electrophoresis so as to obtain the wood tar for the further extraction process.

### EXAMPLES OF EMBODIMENTS OF THE PRESENT INVENTION

The following examples of production of smoke extract for food products by means of supercritical extraction may be based on raw wood tar or on wood tar obtained from a separation process perform on a raw wood tar product, such as a wood tar separated from a raw wood tar product by means of a liquid extraction with the use of diethyl ether, followed by retrieving the extracted fractions to obtain a wood tar, which has a lower viscosity than the raw wood tar product.

A batch process according the present invention may be performed by mixing a portion of wood tar with a similar volume of diatomite and placing this mixture in a suitable reaction container, in which the mixture takes up about 40% of the internal volume of the container. The container is heated to 50°C and this temperature is kept for 15 minutes to ensure that the mixture therein has reached approximately the same temperature. Carbon dioxide is then supplied from a reservoir to the container by means of a high-pressure pump. The pressure within the container is build up as the carbon dioxide is supplied, and the temperature of the container is in the beginning of the filling step regulated by heating means to keep the temperature about 50°C, whereas the compression of the carbon dioxide at the last part of the filling step causes increasing temperatures, and the container may be equipped with cooling means to be used to regulate the temperature at the end of the filing step, which ends when the pressure within the container reaches 150 bars and the temperature is about 50°C. A contact time of 30 minutes at these conditions is applied, where after the carbon dioxide with the extracted parts of the wood tar is allowed to flow to a second chamber, which consists of three containers connected in series. The flow is first directed to a first of these containers, where the pressure is lowered to about 100 bars and the temperature is allowed to drop to about 40°C. This causes a first condensation of extracted parts, which are collected from the container. The carbon dioxide with the remains of the extracted parts of the wood tar is then lead to the second and the third container of the second chamber, where the pressure is lowered to 80 bars and 55 bars, respectively, whereas the temperature by means of heating means is kept about 40°C, and a second and third condensate are collected from the respective containers. The carbon dioxide is then recycled to the reservoir. The extraction cycle is repeated three times in total for a given portion of wood tar, which is then removed from the reaction container together with the diatomite and replaced with a new mixture of wood tar and diatomite and the whole process may be repeated. The fractions condensed in the first and third container of the second chamber may be tested for their contents of PAH before they are released for the use as smoke extract, whereas the condensate from the second container most probably has a very low content of PAH.

In a continuous extraction process, the mixture of wood tar and diatomite is placed in an elongated column reactor being the reaction container, which is kept under pressure at 150 bars during the whole extraction process. Carbon dioxide is fed into an inlet at one end of the reactor, flows through the reactor so that the contact time with the mixture of wood tar and diatomite is between 20 and 40 minutes and out through an outlet at the other end of the reactor, form which it flows to a second chamber comprising a cascade of containers as discussed above with reference to the batch process. The carbon dioxide may be fed and removed batch-wise during the extraction process, in which the conditions of the extraction solvent within the container continuously is kept at supercritical conditions, or a constant flow of carbon dioxide may be provided.

In a further continuous extraction process, the mixture of wood tar and diatomite is diluted with an amount of ethanol of 4% of the volume of the wood tar and the mixture is fed into the column reactor by means of a high pressure pump, flows through the reactor in counter-flow or cross-flow with respect to a continuous flow of the carbon dioxide, and the remains of the mixture is removed from the column reactor after about 90 minutes of contact time with the flow of carbon dioxide in its supercritical state. The extracted fractions of the wood tar are retrieved as discussed above.

## Claims

1. A method of preparing a smoke extract for flavouring of food products comprising an extraction process involving
extracting one or more fractions of a wood tar with an extraction solvent substantially in its supercritical state, and
retrieving at least some of the extracted fraction or fractions of the wood tar to thereby obtain a smoke extract.

2. A method according to claim 1, wherein the extraction solvent is selected from the group consisting of carbon dioxide, methane, ethane, propane, ethylene, propylene, ammonia, methanol, water and mixtures of one or more of these solvents.

3. A method according to claim 1 or 2, wherein the wood from which the tar has been obtained is selected from the group consisting of oak, spruce, pine, beech, cherry, mahogany, ash, maple, alder, elm, birch, hickory and poplar.

4. A method according to any of claims 1-3, wherein the extraction process cycle comprises the steps of
a) supplying a portion of wood tar into a reaction container,
b) supplying a portion of extraction solvent into the reaction container,
c) allowing the extraction solvent in its supercritical state to act on the wood tar for a given contact time so as to extract one or more fractions of the wood tar,
d) leading the extraction solvent and the extracted wood tar components from the reaction container into a second chamber, while the un-extracted parts of the wood tar remain in the reaction container, and
e) reducing the pressure in the second chamber to condense at least one of the extracted tar fractions from the extraction solvent, thereby retrieving the components forming said smoke extract.

5. A method according to claim 4, wherein the extraction is carried out as a batch process, and the extraction solvent is kept in a substantially supercritical state within the reaction container for a given contact time so as to extract one or more fractions of the wood tar,

6. A method according to claim 5, wherein the steps b) to e) of the extraction cycle are repeated at least one time to extract more fractions of the wood tar.

7. A method according to claim 6, wherein the extraction solvent following each extraction cycle is reused in the extraction process.

8. A method according to any of claims 4-7, wherein the portion of wood tar fed into the reaction container occupies preferably 40% or less, more preferably 30% or less and most preferably 20% or less of the interior volume of the reaction container.

9. A method according to any claims 1-4, wherein the extraction is carried out as a continuous process.

10. A method according to claim 9, wherein the continuous extraction process cycle comprises the steps of
a) supplying a portion of wood tar into a reaction container,
b) providing a continuous flow of extraction solvent in a substantially supercritical state through the reaction container to facilitate contact between the extraction solvent and the wood tar, so as to extract one or more fractions of the wood tar,
c) continuously leading a flow of extraction solvent comprising the extracted wood tar fractions from the reaction container and into a second chamber, while the un-extracted parts of wood tar remain in the reaction container,
d) reducing the pressure in the second chamber to condense at least one of the extracted tar fractions from the extraction solvent, thereby retrieving the components forming said smoke extract, and
e) maintaining the flow of extraction solvent through the reaction container for a sufficient time to extract a measurable fraction of the wood tar.

11. A method according to any of the claims 4-10, wherein the extracted wood tar fractions are retrieved by stepwise reduction of the pressure in said second chamber, wherein a part of the extracted wood tar is condensed at each step of the pressure reduction.

12. A method according to any of the claims 4-11, wherein the wood tar prior to the contact with the extraction solvent is brought to a temperature close to the temperature of the applied extraction solvent, preferably within 30°C of said temperature, most preferred within 20°C of said temperature.

13. A method according to any of the previous claims, wherein the wood tar is diluted or suspended in a solvent or suspending agent prior to the extraction process.

14. A method according to any of the previous claims, wherein the wood tar is admixed with a carrier prior to the extraction process.

15. A method according to claim 14, wherein the carrier is substantially non-soluble in the extraction solvent in its supercritical state.

16. A method according to claim 14 or 15, wherein the carrier is selected from the group consisting of diatomite, celite, bentonite, perlite or mixtures thereof.

17. A method according to any of the claims 14-16, wherein the volumetric ratio between wood tar and carrier is in the range of 1: 0.1 and 1: 10, preferably 1: 0.5 to 1: 2.

18. A method according to any of the previous claims, wherein the extraction solvent comprises carbon dioxide in an amount of at least 85% by weight, preferably at least 90% by weight and more preferably at least 95% by weight.

19. A method according to any of the previous claims, wherein the temperature of the extraction solvent is maintained within the range of 20 to 100°C, preferably 30 to 70°C and more preferably 40 to 60°C during the extraction process.

20. A method according to any of claims 4-19, wherein the pressure in the reaction container is maintained within the range of 75 to 500 bars, preferably 100 to 250 bars, and more preferably 120 to 180 bars.

21. A method according to any of the preceding claims, wherein the smoke extract at the end of the extraction process comprises a fraction of the extracted wood tar that amounts to 1 to 60 % by weight, preferably 5 to 40 % by weight and more preferably 5 to 20 % by weight of the wood tar, which has been fed into the reaction container.

22. A method according to any of the preceding claims, wherein the contact time between wood tar and extraction solvent is within the range of 5 to 120 minutes, preferably 15 to 90 minutes and most preferably 20 to 60 minutes.

23. A method according to any of the preceding claims, wherein said wood tar is prepared by means of a separation process performed on a raw wood tar product.

24. A method according to claim 23, wherein the separation process performed on a raw wood tar product for the preparation of the wood tar includes
extraction of one or more fractions of the raw wood tar by means of a liquid solvent, and
retrieving the extracted fractions of the raw wood tar to thereby obtain the wood tar for the further extraction process.

25. A method according to claim 24, wherein the liquid solvent is a substantially non-polar solvent.

26. A method according to claim 23, wherein the liquid solvent is selected from the group consisting of ether, ethanol, propanol, butanol, diethyl ether, hexane, methyl acetate and any mixtures thereof.

27. A method according to any of claims 23-26, wherein the separation process performed on a raw wood tar product for the preparation of the wood tar includes
separation of one or more fractions of the raw wood tar by means of a mechanical separation so as to obtain the wood tar for the further extraction process.

28. A method according to any of claims 23-27, wherein the separation process performed on a raw wood tar product for the preparation of the wood tar includes
distillation of the raw wood tar so as to obtain the wood tar from the distillate for the further extraction process.

29. A method according to claim 28, wherein the distillation comprises a plurality of condensation steps at different condensation temperatures and/or pressures, wherein a fraction of the distillate is collected at each condensation step, and the wood tar for the further extraction process comprises one or more of said fractions.

30. A method according to any of claims 23-29, wherein the separationprocess performed on a raw wood tar product for the preparation of the wood tar includes
separation of one or more fractions of the raw wood tar by means of electrophoresis so as to obtain the wood tar for the further extraction process.

## Patentansprüche

1. Verfahren zur Herstellung eines Rauchextrakts für das Würzen von Nahrungsprodukten, umfassend einen Extraktionsprozess, welcher beinhaltet:
das Extrahieren einer oder mehrerer Fraktionen eines Holzteers mit einem Extraktionslösungsmittel im Wesentlichen in seinem überkritischen Zustand und
Gewinnen mindestens eines Teils der extrahierten Fraktion oder Fraktionen des Holzteers, um **dadurch** einen Rauchextrakt zu erhalten.

2. Verfahren nach Anspruch 1, bei dem das Extraktionslösungsmittel ausgewählt ist aus der Gruppe bestehend aus Kohlendioxid, Methan, Ethan, Propan, Ethylen, Propylen, Ammoniak, Methanol, Wasser und Mischungen von einem oder mehreren dieser Lösungsmittel.

3. Verfahren nach Anspruch 1 oder 2, bei dem das Holz, aus dem der Teer erhalten worden ist, ausgewählt ist aus der Gruppe bestehend aus Eiche, Fichte, Kiefer, Buche, Kirsche, Mahagoni, Esche, Ahorn, Erle, Ulme, Birke, Hickory und Pappel.

4. Verfahren nach irgendeinem der Ansprüche 1 bis 3, bei dem der Extraktionsprozesszyklus die Schritte umfasst:
a) Bereitstellen einer Portion von Holzteer in einem Reaktionsbehälter,
b) Bereitstellen einer Portion von Extraktionslösungsmittel in dem Reaktionsbehälter,
c) Ermöglichen, dass das Reaktionslösungsmittel in seinem überkritischen Zustand für eine gegebene Kontaktzeit auf den Holzteer einwirkt, um eine oder mehrere Fraktionen des Holzteers zu extrahieren,
d) Leiten des Extraktionslösungsmittels und der extrahierten Holzteer-Komponenten aus dem Reaktionsbehälter in eine zweite Kammer, während die nicht-extrahierten Teile des Holzteers in dem Reaktionsbehälter verbleiben, und
e) Verringern des Drucks in der zweiten Kammer, um zumindest eine der extrahierten Teerfraktionen aus dem Extraktionslösungsmittel zu kondensieren, wodurch die Komponenten, die den Rauchextrakt bilden, gewonnen werden.

5. Verfahren nach Anspruch 4, bei dem die Extraktion als Chargenprozess durchgeführt wird und das Extraktionslösungsmittel für eine gegebene Kontaktzeit in einem im Wesentlichen überkritischen Zustand in dem Reaktionsbehälter gehalten wird, um eine oder mehrere Fraktionen des Holzteers zu extrahieren.

6. Verfahren nach Anspruch 5, bei dem die Schritte b) bis e) des Extraktionszyklus mindestens einmal wiederholt werden, um mehr Fraktionen des Holzteers zu extrahieren.

7. Verfahren nach Anspruch 6, bei dem das Extraktionslösungsmittel nach jedem Extraktionszyklus in dem Extraktionsprozess wiederverwendet wird.

8. Verfahren nach irgendeinem der Ansprüche 4 - 7, bei dem die Portion von Holzteer, die in den Reaktionsbehälter eingeführt wird, vorzugsweise 40 % oder weniger, bevorzugter 30 % oder weniger, und am bevorzugtesten 20 % oder weniger des Innenvolumens des Reaktionsbehälters einnimmt.

9. Verfahren nach irgendeinem der Ansprüche 1 bis 4, bei dem die Extraktion als kontinuierliches Verfahren ausgeführt wird.

10. Verfahren nach Anspruch 9, bei dem der kontinuierliche Extraktionsprozesszyklus die Schritte umfasst:
a) Bereitstellen einer Portion von Holzteer in einem Reaktionsbehälter,
b) Bereitstellen eines kontinuierlichen Stroms von Extraktionslösungsmittel in im Wesentlichen überkritischem Zustand durch den Reaktionsbehälter, um den Kontakt zwischen dem Extraktionslösungsmittel und dem Holzteer zu erleichtern, um eine oder mehrere Fraktionen des Holzteers zu extrahieren;
c) kontinuierliches Leiten eines Stroms von Extraktionslösungsmittel, der die extrahierten Holzteerfraktionen umfasst, aus dem Reaktionsbehälter und in eine zweite Kammer, während die nicht-extrahierten Teile von Holzteer in dem Reaktionsbehälter verbleiben,
d) Verringern des Drucks in der zweiten Kammer, um zumindest eine der extrahierten Teerfraktionen aus dem Extraktionslösungsmittel zu kondensieren, wodurch die Komponenten gewonnen werden, die den Rauchextrakt bilden, und
e) Aufrechterhalten des Stroms von Extraktionslösungsmittel durch den Reaktionsbehälter für eine ausreichende Zeit, um eine messbare Fraktion des Holzteers zu extrahieren.

11. Verfahren nach irgendeinem der Ansprüche 4 - 10, bei dem die extrahierten Holzteertraktionen durch schrittweise Verringerung des Drucks in der zweiten Kammer gewonnen werden, wobei ein Teil des extrahierten Holzteers bei jedem Schritt der Druckverringerung kondensiert wird.

12. Verfahren nach irgendeinem der Ansprüche 4 - 11, bei dem der Holzteer vor dem Kontakt mit dem Extraktionslösungsmittel auf eine Temperatur nahe der Temperatur des verwendeten Extraktionslösungsmittels gebracht wird, vorzugsweise innerhalb von 30 °C der Temperatur, am bevorzugtesten innerhalb von 20 °C der Temperatur.

13. Verfahren nach irgendeinem der vorangehenden Ansprüche, bei dem der Holzteer vor dem Extraktionsprozess in einem Lösungsmittel oder Suspendiermittel verdünnt oder suspendiert wird.

14. Verfahren nach irgendeinem der vorangehenden Ansprüche, bei dem der Holzteer vor dem Extraktionsprozess mit einem Träger gemischt wird.

15. Verfahren nach Anspruch 14, bei dem der Träger in dem Extraktionslösungsmittel in seinem überkritischen Zustand im Wesentlichen unlöslich ist.

16. Verfahren nach Anspruch 14 oder 15, bei dem der Träger ausgewählt ist aus der Gruppe bestehend aus Diatomeenerde, Kieselgur, Bentonit, Perlit oder Mischungen derselben.

17. Verfahren nach irgendeinem der Ansprüche 14 - 16, bei dem das Volumenverhältnis zwischen Holzteer und Träger im Bereich von 1 : 0,1 und 1 : 10, bevorzugt 1 : 0,5 bis 1 : 2 liegt.

18. Verfahren nach irgendeinem der vorangehenden Ansprüche, bei dem das Extraktionslösungsmittel Kohlendioxid in einer Menge von mindestens 85 Gew.-%, bevorzugt mindestens 90 Gew.-% und bevorzugter mindestens 95 Gew.-% umfasst.

19. Verfahren nach irgendeinem der vorangehenden Ansprüche, bei dem die Temperatur des Extraktionslösungsmittels während des Extraktionsprozesses im Bereich von 20 bis 100 °C, bevorzugt 30 bis 70 °C und bevorzugter 40 bis 60 °C gehalten wird.

20. Verfahren nach irgendeinem der Ansprüche 4 - 19, bei dem der Druck in dem Extraktionsbehälter im Bereich von 75 bis 500 Bar, bevorzugt 100 bis 250 Bar und bevorzugter 120 bis 180 Bar aufrechterhalten wird.

21. Verfahren nach irgendeinem der vorangehenden Ansprüche, bei dem der Rauchextrakt am Ende des Extraktionsprozesses eine Fraktion des extrahierten Holzteers umfasst, die 1 bis 60 Gew.-%, bevorzugt 5 bis 40 Gew.-% und bevorzugter 5 bis 20 Gew.-% des Holzteers umfasst, welcher in den Reaktionsbehälter eingeführt worden ist.

22. Verfahren nach irgendeinem der vorangehenden Ansprüche, bei dem die Kontaktzeit zwischen Holzteer und Extraktionslösungsmittel im Bereich von 5 bis 120 Minuten, bevorzugt 15 bis 90 Minuten und am bevorzugtesten 20 bis 60 Minuten liegt,

23. Verfahren nach irgendeinem der vorangehenden Ansprüche, bei dem der Holzteer mittels eines Abtrennverfahrens hergestellt wird, das bei rohem Holzteerprodukt durchgeführt wird.

24. Verfahren nach Anspruch 23, bei dem das Abtrennverfahren, das bei einem rohen Holzteerprodukt für die Herstellung des Holzteers durchgeführt wird, die Extraktion einer oder mehrerer Fraktionen des rohen Holzteers mittels eines flüssigen Lösungsmittels und
das Gewinnen der extrahierten Fraktionen des rohen Holzteers einschließt, um **dadurch** den Holzteer für den weiteren Extraktionsprozess zu erhalten.

25. Verfahren nach Anspruch 24, bei dem das flüssige Lösungsmittel ein im Wesentlichen unpolares Lösungsmittel ist.

26. Verfahren nach Anspruch 23, bei dem das flüssige Lösungsmittel ausgewählt ist aus der Gruppe bestehend aus Ether, Ethanol, Propanol, Butanol, Diethylether, Hexan, Methylacetat und jeglichen Mischungen derselben.

27. Verfahren nach irgendeinem der Ansprüche 23 - 26, bei dem das Abtrennverfahren, das mit dem rohen Holzteerprodukt zur Herstellung des Holzteers durchgeführt wird,
die Abtrennung einer oder mehrerer Fraktionen des rohen Holzteers mittels einer mechanischen Abtrennung einschließt, um den Holzteer für den weiteren Extraktionsprozess zu erhalten.

28. Verfahren nach irgendeinem der Ansprüche 23 - 27, bei dem das Abtrennverfahren, das mit einem rohen Holzteerprodukt für die Herstellung des Holzteers durchgeführt wird,
die Destillation des rohen Holzteers einschließt, um den Holzteer aus dem Destillat für den weiteren Extraktionsprozess zu erhalten.

29. Verfahren nach Anspruch 28, bei dem die Destillation eine Mehrzahl von Kondensationsschritten bei verschiedenen Kondensationstemperaturen und/ oder -drücken umfasst, wobei eine Fraktion des Destillats bei jedem Kondensationsschritt gesammelt wird, und der Holzteer für den weiteren Extraktionsprozess eine oder mehrere dieser Fraktionen umfasst.

30. Verfahren nach irgendeinem der Ansprüche 23 - 29, bei dem das Abtrennverfahren, das bei dem rohen Holzteerprodukt für die Herstellung des Holzteers durchgeführt wird,
die Abtrennung einer oder mehrerer Fraktionen des rohen Holzteers mittels Elektrophorese einschließt, um den Holzteer für den weiteren Extraktionsprozess zu erhalten.

## Revendications

1. Procédé de préparation d'un extrait de fumée pour aromatiser des produits alimentaires, comprenant un procédé d'extraction impliquant
l'extraction d'une ou de plusieurs fractions de goudron de bois avec un solvant d'extraction sensiblement dans son état supercritique, et
la récupération d'au moins une partie de la fraction extraite ou des fractions extraites du goudron de bois pour ainsi obtenir un extrait de fumée.

2. Procédé selon la revendication 1, dans lequel le solvant d'extraction est choisi dans le groupe constitué par le dioxyde de carbone, le méthane, l'éthane, le propane, l'éthylène, le propylène, l'ammoniac, le méthanol, l'eau et les mélanges d'un ou de plusieurs de ces solvants.

3. Procédé selon la revendication 1 ou 2, dans lequel le bois à partir duquel le goudron a été obtenu est choisi dans le groupe constitué par le chêne, l'épicéa, le pin, l'hêtre, le cerisier, l'acajou, le frêne, l'érable, l'aulne, l'orme, le bouleau, l'hickory et le peuplier.

4. Procédé selon l'une quelconque des revendications 1 à 3, dans lequel le cycle du procédé d'extraction comprend les étapes suivantes
a) introduire une partie du goudron de bois dans un récipient réactionnel,
b) introduire une partie du solvant d'extraction dans le récipient réactionnel,
c) permettre au solvant d'extraction dans son état supercritique d'agir sur le goudron de bois pendant un temps de contact donné afin d'extraire une ou plusieurs fractions du goudron de bois,
d) amener le solvant d'extraction et les composants extraits du goudron de bois du récipient réactionnel dans une seconde chambre, tandis que les parties non extraites du goudron de bois restent dans le récipient réactionnel, et
e) réduire la pression dans la seconde chambre pour condenser au moins une des fractions de goudron extraites à partir du solvant d'extraction, pour ainsi récupérer les composants formant ledit extrait de fumée.

5. Procédé selon la revendication 4, dans lequel l'extraction est menée sous la forme d'un procédé discontinu, et le solvant d'extraction est maintenu dans un état sensiblement supercritique à l'intérieur du récipient réactionnel pendant un temps de contact donné afin d'extraire une ou plusieurs fractions du goudron de bois.

6. Procédé selon la revendication 5, dans lequel les étapes b) à e) du cycle d'extraction sont répétées au moins une fois pour extraire plus de fractions du goudron de bois.

7. Procédé selon la revendication 6, dans lequel le solvant d'extraction après chaque cycle d'extraction est réutilisé dans le procédé d'extraction.

8. Procédé selon l'une quelconque des revendications 4 à 7, dans lequel la partie de goudron de bois introduite dans le récipient réactionnel occupe de préférence 40 % ou moins, de manière davantage préférée 30 % ou moins, et de manière préférée entre toutes 20 % ou moins du volume intérieur du récipient réactionnel.

9. Procédé selon l'une quelconque des revendications 1 à 4, dans lequel l'extraction est menée sous la forme d'un procédé continu.

10. Procédé selon la revendication 9, dans lequel le cycle du procédé d'extraction continue comprend les étapes suivantes
a) introduire une partie du goudron de bois dans un récipient réactionnel,
b) fournir un flux continu de solvant d'extraction dans un état sensiblement supercritique à travers le récipient réactionnel pour faciliter le contact entre le solvant d'extraction et le goudron de bois, afin d'extraire une ou plusieurs fractions du goudron de bois,
c) acheminer en continu un flux de solvant d'extraction comprenant les fractions extraites du goudron de bois à partir du récipient réactionnel et dans une seconde chambre, tandis que les parties non extraites du goudron de bois restent dans le récipient réactionnel,
d) réduire la pression dans la seconde chambre pour condenser au moins une des fractions de goudron extraites à partir du solvant d'extraction, pour ainsi récupérer les composants formant ledit extrait de fumée, et
e) maintenir le flux de solvant d'extraction à travers le récipient réactionnel pendant une durée suffisante pour extraire une fraction mesurable du goudron de bois.

11. Procédé selon l'une quelconque des revendications 4 à 10, dans lequel les fractions extraites de goudron de bois sont récupérées par réduction par étape de la pression dans ladite seconde chambre, dans lequel une partie du goudron de bois extrait est condensée à chaque étape de la réduction de pression.

12. Procédé selon l'une quelconque des revendications 4 à 11, dans lequel le goudron de bois avant le contact avec le solvant d'extraction est porté à une température proche de la température du solvant d'extraction appliqué, de préférence à moins de 30 °C de ladite température, et de manière préférée entre toutes à moins de 20 °C de ladite température.

13. Procédé selon l'une quelconque des revendications précédentes, dans lequel le goudron de bois est dilué ou mis en suspension dans un solvant ou un agent de suspension avant le procédé d'extraction.

14. Procédé selon l'une quelconque des revendications précédentes, dans lequel le goudron de bois est mélangé avec un support avant le procédé d'extraction.

15. Procédé selon la revendication 14, dans lequel le support est sensiblement non soluble dans le solvant d'extraction dans son état supercritique.

16. Procédé selon la revendication 14 ou 15, dans lequel le support est choisi dans le groupe constitué par la diatomite, la célite, la bentonite, la perlite et leurs mélanges.

17. Procédé selon l'une quelconque des revendications 14 à 16, dans lequel le rapport volumétrique entre le goudron de bois et le support est dans la plage allant de 1 : 0,1 1 à 1 : 10, de préférence de 1 : 0,5 à 1 : 2.

18. Procédé selon l'une quelconque des revendications précédentes, dans lequel le solvant d'extraction comprend du dioxyde de carbone en une quantité d'au moins 85 % en poids, de préférence d'au moins 90 % en poids et de manière davantage préférée d'au moins 95 % en poids.

19. Procédé selon l'une quelconque des revendications précédentes, dans lequel la température du solvant d'extraction est maintenue dans la plage allant de 20 °C à 100 °C, de préférence de 30 °C à 70 °C, et de manière davantage préférée de 40 °C à 60 °C pendant le procédé d'extraction.

20. Procédé selon l'une quelconque des revendications 4 à 19, dans lequel la pression dans le récipient réactionnel est maintenue dans la plage allant de 75 à 500 bars, de préférence de 100 à 250 bars, et de manière davantage préférée de 120 à 180 bars.

21. Procédé selon l'une quelconque des revendications précédentes, dans lequel l'extrait de fumée à la fin du procédé d'extraction comprend une fraction du goudron de bois extrait qui est de 1 % à 60 % en poids, de préférence de 5 % à 40 % en poids et de manière davantage préférée de 5 % à 20 % en poids du goudron de bois qui a été introduit dans le récipient réactionnel.

22. Procédé selon l'une quelconque des revendications précédentes, dans lequel le temps de contact entre le goudron de bois et le solvant d'extraction est dans la plage allant de 5 à 120 minutes, de préférence de 15 à 90 minutes, et de manière préférée entre toutes de 20 à 60 minutes.

23. Procédé selon l'une quelconque des revendications précédentes, dans lequel ledit goudron de bois est préparé au moyen d'un procédé de séparation effectué sur un produit de goudron brut de bois.

24. Procédé selon la revendication 23, dans lequel le procédé de séparation effectué sur un produit de goudron brut de bois pour la préparation du goudron de bois comprend
l'extraction d'une ou de plusieurs fractions du goudron brut de bois au moyen d'un solvant liquide, et
la récupération des fractions extraites du goudron brut de bois pour ainsi obtenir le goudron de bois destiné au procédé d'extraction suivant.

25. Procédé selon la revendication 24, dans lequel le solvant liquide est un solvant sensiblement non polaire.

26. Procédé selon la revendication 23, dans lequel le solvant liquide est choisi dans le groupe constitué par l'éther, l'éthanol, le propanol, le butanol, le diéthyl éther, l'hexane, l'acétate de méthyle et l'un quelconque de leurs mélanges.

27. Procédé selon l'une quelconque des revendications 23 à 26, dans lequel le procédé de séparation effectué sur un produit de goudron brut de bois pour la préparation du goudron de bois comprend
la séparation d'une ou de plusieurs fractions du goudron brut de bois au moyen d'une séparation mécanique afin d'obtenir le goudron de bois destiné au procédé d'extraction suivant.

28. Procédé selon l'une quelconque des revendications 23 à 27, dans lequel le procédé de séparation effectué sur un produit de goudron brut de bois pour la préparation du goudron de bois comprend
la distillation d'un goudron brut de bois afin d'obtenir le goudron de bois à partir du distillat pour le procédé d'extraction suivant.

29. Procédé selon la revendication 28, dans lequel la distillation comprend une pluralité d'étapes de condensation à différentes températures de condensation et/ou pressions, dans lequel une fraction du distillat est collectée à chaque étape de condensation, et le goudron de bois destiné au procédé d'extraction suivant comprend une ou plusieurs desdites fractions.

30. Procédé selon l'une quelconque des revendications 23 à 29, dans lequel le procédé de séparation effectué sur un produit de goudron brut de bois pour la préparation du goudron de bois comprend
la séparation d'une ou de plusieurs fractions du goudron brut de bois par électrophorèse afin d'obtenir le goudron de bois destiné au procédé d'extraction suivant.
